# EUROPÄISCHE PATENTSCHRIFT

(11) **EP 1 289 752 B1**
(45) Veröffentlichungstag und Bekanntmachung des Hinweises auf die Patenterteilung: **19.05.2004**
(21) Anmeldenummer: 01949442.6
(22) Anmeldetag: 28.06.2001
(51) Int. Cl.: B32B 27/06, B32B 21/08, E04F 15/20

(54) **LAMINATFUSSBODEN MIT ZWEILAGIGER TRITTSCHALLDÄMPFUNG**
LAMINATE FLOOR COVERING WITH A DOUBLE-LAYERED IMPACT SOUND INSULATION SYSTEM
PLANCHER LAMINE PRESENTANT UN SYSTEME BICOUCHE DESTINE A ATTENUER LES BRUITS DE PAS

(30) Priorität: 22.05.2001 DE 20108668 U
(43) Veröffentlichungstag der Anmeldung: 12.03.2003
(73) Patentinhaber: Kronospan Technical Co. Ltd., 2404 Engomi, Nicosia (CY)
(72) Erfinder: DÖRING, Dieter, 01561 Lampertswalde (DE)
(74) Vertreter: Gille Hrabal Struck Neidlein Prop Roos
(86) Internationale Anmeldenummer: PCT/EP2001/007357
(87) Internationale Veröffentlichungsnummer: WO 2002/100638

(56) Entgegenhaltungen:
- DE-U- 29 508 231
- DE-U- 29 923 734
- FR-A- 2 351 784
- US-A- 4 865 912
- US-A- 5 543 193

## Beschreibung

Die Erfindung betrifft einen Laminatfußbodenbelag mit einer trittschalldämpfenden Schicht, wie er in Häusern und Wohnungen vielfach verwendet wird, sowie ein Herstellungsverfahren für den Fußbodenbelag. Ein solcher Fußbodenbelag ist aus der Druckschrift WO 01/09461 A1 bekannt.

Ein starrer Fußbodenbelag kann aus Holz, Holzwerkstoffen und/oder aus Kunststoff bestehen. Bekannt sind u. a. Laminatfußböden, die aus einzelnen Paneelen zusammengesetzt sind und schwimmend verlegt werden. Ein einzelnes Paneel besteht beispielsweise aus einer HDF-Trägerplatte sowie einer hierauf aufgebrachten Laminatschicht, die u. a. für das Aussehen des Fußbodens verantwortlich ist.

Bewegen sich Personen in einem Raum, der mit starren Fußbodenpaneelen ausgestattet ist, so ist die Geräuschentwicklung deutlich größer als bei Räumen, die mit Teppichen oder elastischen Bodenbelägen wie PVC ausgelegt sind. Die Geräuschentwicklung beruht auf Reflektionen von Stoßwellen, die beim Begehen in den Boden eingeleitet werden. Das Amplitudenspektrum der Stoß- bzw. Schallwellen hängt von den Grenzen Raum - Boden, Boden - Untergrund sowie von der Dämpfung in den verschiedenen Schichten ab. Die Geräuschentwicklung ist dann besonders groß, wenn zwischen zwei Schichten, also z. B. zwischen dem Laminatfußboden und dem darunter befindlichen Estrich eine Luftschicht verbleibt.

Um die Geräuschentwicklung beim Begehen herabzusetzen, werden verschiedene mattenförmige Materialien wie Noppaschaum, Kork, polymergebundene Matten aus Altgummi und Kork, Wellpappe oder weiche Holzfaservliese als Unterlage unter einem starren Bodenbelag oberhalb des Estrichs eingesetzt. Die hierdurch erzielbare schalldämpfende Wirkung ist jedoch unbefriedigend. Daher wurde bereits versucht, die genannten mattenförmigen Materialien direkt auf der Bodenrückseite eines starren Fußbodenbelages, also z. B. auf den Boden eines Fußbodenpaneels zu kleben. Nachteilhaft muss hierfür ein hoher technischer Aufwand betrieben werden. Folglich sind die Kosten hoch. Insgesamt ist die erreichte Schallreduzierung im Verhältnis zum technischen Aufwand unbefriedigend.

So ist aus der Druckschrift DE 196 20 987 C1 eine Dämmfolie bekannt, die mit einem Klebestreifen ausgerüstet ist. Es ist vorgesehen, die Dämmfolie auf der Unterseite eines starren Fußbodenbelages aufzukleben, um so eine Geräuschentwicklung beim Begehen des Fußbodens herabzusetzen.

Aus der Druckschrift DE 43 29 766 A1 ist bekannt, einen polymeren Werkstoff zur Trittschalldämmung eines Bodens vorzusehen.

Gemäß der Druckschrift DE 38 35 638 A1 wird ein Dämmmaterial aus expandierfähigem Polystyrol als Dämmschicht bei starren Fußbodenbelägen eingesetzt.

Aus der Druckschrift WO 01/09461 A1 ist bekannt, eine Schicht aus thermoplastischem Material fest mit dem Fußbodenbelag zu verbinden, um so zu guten dämpfenden Eigenschaften zu gelangen.

Beim Stand der Technik ist in der Regel nachteilhaft eine relativ dicke schalldämpfende Schicht erforderlich, um den gewünschten Effekt zu erzielen. Die Verlegung dicker Fußbodenbeläge ist jedoch regelmäßig in einem Gebäude problematisch, da wegen Türen und Böden in angrenzenden Räumen der Laminatfußboden nicht zu dick sein darf. Andernfalls gibt es Stufen zum angrenzenden Raum oder eine Tür kann nicht mehr geöffnet oder geschlossen werden. Stufen sind aus optischen Gründen unerwünscht. Außerdem stellen sie sogenannte Stolperfallen dar. Türen müssen an die geänderte Fußbodenhöhe angepasst werden.

Gegenüber dem vorgenannten Stand der Technik ist es Aufgabe der Erfindung, einen Laminatfußbodenbelag zu schaffen, der über sehr gute schalldämpfende Eigenschaften verfügt, so dass die schalldämpfende Schicht sehr dünn sein kann. Aufgabe der Erfindung ist ferner die Schaffung eines Verfahrens, mit dem der erfindungsgemäße Fußbodenbelag auf einfache Weise hergestellt werden kann.

Die Aufgabe der Erfindung wird durch einen Laminatfußbodenbelag mit den Merkmalen des ersten Anspruches gelöst. Vorteilhafte Ausgestaltungen ergeben sich aus den nachgeordneten Ansprüchen.

Der Laminatfußbodenbelag nach Anspruch 1 weist auf seiner Unterseite eine Schicht aus thermoplastischem Material auf. Die Schicht aus thermoplastischem Material ist fest mit dem Fußbodenbelag verbunden. Der Fußbodenbelag besteht aus Holz, Holzwerkstoffen und / oder Kunststoffen.

Thermoplastisches Material ist ein solches, welches sich bei Überschreiten einer materialabhängigen Temperatur erweicht und fließfähig wird. In diesem Zustand ist das Material verformbar und kann auf die Unterseite des Fußbodenbelages durch Streichen oder Aufwalzen aufgebracht und so im Sinne der Erfindung fest mit dem Fußbodenbelag verbunden werden.

Wird die vorgenannte Temperatur unterschritten, so verfestigt sich das Material.

Die vorgenannten Eigenschaften des thermoplastischen Materials ermöglichen es, dieses bei erhöhten Temperaturen mit der Unterseite des starren Fußbodenbelages durch Aufstreichen oder Aufwalzen fest zu verbinden. Durch die feste Verbindung werden die Schallwellen direkt in die schalldämpfende Schicht ohne Reflexion an der Grenzschicht übertragen. Damit entfällt eine wesentliche Ursache für eine fehlende Schalldämpfung, die bei Fußböden gemäß eingangs genanntem Stand der Technik problematisch ist. Es resultiert eine sehr gute Schalldämpfung.

An die Unterseite der schalldämpfenden thermoplastischen Schicht ist diese mit einer weiteren dünnen Schicht aus Papier verbunden. Auch zwischen dieser weiteren dünnen Schicht und der thermoplastischen Schicht verbessert die feste Verbindung die schalldämpfenden Eigenschaften.

Die schalldämpfende Schicht aus thermoplastischem Material müsste idealerweise direkt mit dem Fußboden, auf dem die Paneele aufliegen, also zum Beispiel einem Estrich fest verbunden sein. In der Praxis ist dies zu aufwendig. Es hat sich nun herausgestellt, dass die schalldämpfenden Eigenschaften der thermoplastischen Schicht im Vergleich zum eingangs genannten Stand der Technik weiter verbessert werden können, wenn diese auf der Unterseite nicht einfach auf einem Estrich oder ähnlichem aufliegt, sondern statt dessen mit einer dünnen weiteren Schicht aus Papier an der Unterseite verbunden ist. Schichtdicken der schalldämpfenden Schicht unterhalb von 2 Millimetern bei geeignet gewählter Schicht, also bei einem geeignet gewählten Papier sind dann ausreichend, um zu sehr guten schalldämpfenden Eigenschaften zu gelangen.

Die weitere Schicht verfügt im Vergleich zur thermoplastischen Schicht nicht über schalldämpfende Wirkungen. Sie ist dünner als die Schicht aus thermoplastischem Material.

Da das thermoplastische Material lediglich erwärmt und aufgestrichen oder aufgewalzt werden muss, ist die Herstellung einfach. Ein hoher technischer Aufwand muss somit nicht betrieben werden. Das thermoplastische Material ist dann porenfrei aufgebracht, was ebenfalls die schalldämpfende Wirkung der thermoplastischen Schicht fördert.

Die Erfindung kann grundsätzlich bei jedem Fußbodenbelag angewendet werden. Das erfindungsgemäße Problem tritt jedoch insbesondere bei starren Fußbodenbelägen wie Laminat oder Parkett auf. Ein starrer Fußbodenbelag besteht in der Regel aus Holz, Holzwerkstoffen (HDF oder MDF) und/oder aus Kunststoff.

Als zweckmäßig hat sich eine Stärke von wenigstens 0,1 mm der schalldämpfenden Schicht ergeben. Eine Stärke von 2 mm der schalldämpfenden Schicht aus thermoplastischem Material sollte nicht überschritten werden. Andernfalls werden die Paneele unerwünscht sehr dick. Auch steht der erforderliche Materialaufwand nicht in einem wirtschaftlichen Verhältnis zum erzielbaren Effekt.

In Versuchen hat sich eine Stärke von 0,3 mm der thermoplastischen Schicht als vorteilhaft herausgestellt, um die gewünschten Ziele "dünnes Paneel" sowie "sehr gute Trittschalldämpfung" miteinander zu verbinden. Voraussetzung hierfür ist der Einsatz der weiteren Schicht, also beispielsweise der Einsatz eines besonders gut geeigneten Papiers.

Selbstverständlich ist die geeignetste Schichtdicke der thermoplastischen Schicht materialabhängig. Im jeweiligen Einzelfall variiert diese also.

Als thermoplastisches Material werden insbesondere Polymerisate oder Copolymerisate vorgesehen. Zu bevorzugen sind solche Polymerisate oder Copolymerisate, die im Raumtemperaturbereich ein ausgeprägtes physikalisches Relaxationsverhalten zeigen. Beispiele für thermoplastische Polymere mit ausgeprägtem physikalischen Relaxationsverhalten im Raumtemperaturbereich sind Polyvinylpropionat oder Polyvinylacetat. Dagegen ist beispielsweise Polycarbonat mit seiner hohen Glastemperatur ein völlig ungeeignetes Material. Messtechnisch zeigen geeignete Materialien beispielsweise bei der Darstellung des Torsionsmoduls in Abhängigkeit von der Temperatur im Verlustmodul tan δ im Raumtemperaturbereich bzw. unmittelbar angrenzenden Temperaturbereichen ein ausgeprägtes Maximum. Die physikalischen Grundlagen einschließlich beispielhafter Kurven enthalten Lehrbücher der Polymerphysik wie beispielsweise:
Chemie, Physik und Technologie der Kunststoffe Band 6, Kunststoffe 1 - Struktur und physikalisches Verhalten der Kunststoffe -, Kapitel 4; K. A. Wolf, Springer - Verlag 1962.

Zeigt das Material ein ausgeprägtes physikalisches Relaxationsverhalten im Raumtemperaturbereich, so wird eine besonders gute Dämpfung erzielt, da besonders gut kinetische Energie in Wärme umgewandelt wird.

Beispiele für Materialien, die ein besonders gutes Relaxationsverhalten bei Raumtemperatur zeigen, sind:

Polyvinylformale, Polyvinylbutyrale, Polyvinyläther, Polyisobutene oder Copolymerisate wie z. B. Terpolymerisate aus Acrylnitril, Butadien und Styrol (ABS), Copolymere aus Vinylchlorid und 2-Athylhexylacrylat, Copolymere aus Vinylacetat und Vinyllaurat oder auch Polymermischungen dieser Polymere auch unter Zusatz typischer Polymerweichmacher.

Ein weiter verbesserter schalldämpfender Effekt wird bewirkt, indem Polymerisaten oder Copolymerisaten Füllstoffe, insbesondere leichte organische Füllstoffe mit einer Dichte kleiner als 1 g/cm³ wie zum Beispiel Holzmehl zugesetzt werden. Derartige Füllstoffe können bis zu 90 Masse-% zugesetzt werden. Vorteilhaft ist ein Zusatz von wenigstens 10 Masse-%. Insbesondere sollten 30 Masse-% zugesetzt sein.

In einer weiteren vorteilhaften Ausgestaltung der Erfindung wird das thermoplastische Material so gewählt, dass es adhäsive Eigenschaften aufweist. Adhäsion ist ein polymertypischer Fachbegriff. Ein Beispiel für ein Material, welches im Sinne der Erfindung adhäsive Eigenschaften aufweist, sind thermoplastische Kautschuke.

Wird das Material so gewählt, dass es adhäsive Eigenschaften aufweist, so haftet es erwünscht auf der weiteren Schicht. Lufteinschluss zwischen der weiteren Schicht und der thermoplastischen Schicht wird so vermieden. Schall wird daher entsprechend gut gedämpft.

Die schalldämpfenden Eigenschaften sind dann in einer Ausführungsform besonders gut, wenn ein sehr festes, dünnes Papier eingesetzt wird. Aus diesem Grunde liegt das Papiergewicht vorteilhaft bei lediglich 10 bis 50 g/m². Um zu einem besonders festen Papier zu gelangen, ist dieses vorteilhaft mit einem Kunstharz imprägniert. Das Kunstharz ist insbesondere in das Innere des Papiers zum Beispiel durch Hineinpressen gebracht worden. Das Papier ist vorzugsweise mit Acrylat imprägniert worden, welches sich vorteilhaft im Inneren des Papiers befindet. Das Papiergewicht beträgt dann bevorzugt nicht mehr als 30 g/m².

Eine feste, dünne weitere Schicht, also zum Beispiel ein festes Papier mit geringem Gewicht einzusetzen, hat ferner den Vorteil, dass durch die weitere Schicht die Gesamtdicke des Paneels kaum gesteigert wird.

Das eingesetzte Papier weist insbesondere dann die bevorzugte hohe Festigkeit im Sinne der Erfindung auf, wenn es keine Spaltung im Anschluss an die Durchführung eines normierten Wasserdampftests zeigt, bei dem das Papier zwei Stunden lang einem Wasserdampf ausgesetzt wird.

Der anspruchsgemäße Laminatfußbodenbelag wird hergestellt, indem thermoplastisches Material so erwärmt wird, dass es fließfähig wird. Das erwärmte Material wird auf die Unterseite von Elementen des Fußbodenbelages oder auf eine Trägerplatte für einen solchen Fußbodenbelag aufgestrichen oder aufgewalzt. Das erwärmte thermoplastische Material wird alternativ zunächst auf das Papier mit der gewünschten Schichtdicke aufgebracht. Es wird beispielsweise aufgedüst. Anschließend wird die aus thermoplastischem Material bestehende Schicht auf der Unterseite eines Paneels so aufgewalzt, dass die Papierschicht die Unterseite abschließt. Anschließend werden die Fußbodenelemente bzw. die Trägerplatte mit dem aufgebrachten thermoplastischen Material abgekühlt.

Verfahrensgemäß wird das dünne, Papier mit einer acrylathaltigen Dispersion oder Mischung imprägniert, um so zu einem sehr festen Papier zu gelangen.

Die zur Imprägnierung eingesetzte acrylathaltige Dispersion oder Mischung enthält Wasser, in der Acrylatpartikel dispergiert sind. Geeignete Acrylate sind daher solche, die gut dispergierend sind.

In einer vorteilhaften Ausgestaltung wird die acrylathaltige Dispersion oder Mischung zwecks Imprägnierung in das Papier hineingepresst. Hierfür wird beispielsweise das Papier durch Walzen, die gegeneinander gepresst sind, hindurchgeführt. Auf eine Walze wird die acrylathaltige Dispersion oder Mischung kontinuierlich aufgetragen. Verlässt das Papier die Walze, so ist die Dispersion oder die Mischung in das Papier hineingepresst worden.

Wesentlich ist, dass das dispergierte Acrylat bzw. die Mischung auf das Papier nicht lediglich aufgestrichen wird, da dann das dispergierte Acrylat bzw. die Mischung nicht oder nur unzureichend in das Papier eindringen würde. Durch das Pressen wird sichergestellt, dass die Dispersion oder die Mischung in das Papier eindringt und so das Papier die gewünschte verbesserte Festigkeit erlangt.

In einer vorteilhaften Ausgestaltung des Verfahrens wird das Papier vor dem Hineinpressen der acrylathaltigen Dispersion oder Mischung der Imprägnierung entlüftet. Hierfür wird das Papier insbesondere einseitig mit der acrylathaltigen Dispersion oder Mischung getränkt. Die im Papier befindliche Luft wird so durch die Dispersion oder die Mischung ersetzt.

In einer Ausführungsform der Erfindung wird eine Harz-Acrylat-Mischung oder -Dispersion, insbesondere eine Aminoharz-Acrylat-Mischung für die Imprägnierung verwendet. Mit einer derartigen Mischung oder Dispersion lassen sich Papiergewichte bis zu einer Untergrenze von ca. 10 Gramm pro Quadratmeter realisieren. Derartig hergestellte Papiere sind bei geeignetem Mischungsverhältnis hinreichend reißfest, um anspruchsgemäß eingesetzt werden zu können. Es kann dem Fachmann überlassen bleiben, besonders geeignete Mischungsverhältnisse durch wenige Versuche aufzufinden. Optimale Werte des so behandelten Papiers liegen derzeit zwischen 25 bis 35 g/m².

In einer bevorzugten Ausführungsform der Erfindung wird die acrylathaltige Dispersion oder Mischung in entlüftetes Papier von beiden Seiten hineingepresst. Es hat sich gezeigt, dass sich dann das Papier von der Mitte her mit der acrylathaltigen Dispersion oder Mischung auffüllt. Derartig imprägniertes Papier eignet sich für die anspruchsgemäße Verwendung an der Unterseite einer schalldämpfenden Schicht besonders gut geeignet.

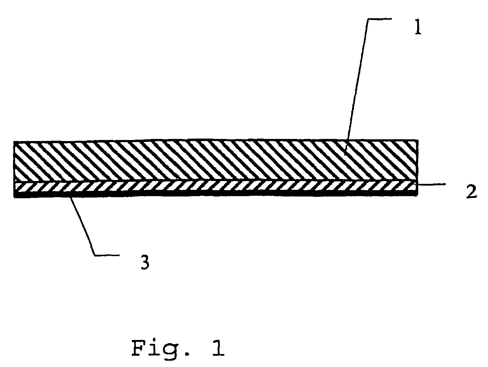

Die Erfindung wird anhand des nachfolgenden Ausführungsbeispiels näher erläutert. Als starrer Fußbodenbelag wird in der Figur 1 ein Fußbodenpaneel 1 gezeigt, welches das Format 1285 x 185 x 8 mm aufweist. Dieses besteht aus einer 0,8 mm starken Hochdrucklaminatschicht, einer 6,4 mm dicken HDF-Trägerplatte mit einer Dichte von 870 kg/m³ sowie einer 0,8 mm starken Hochdrucklaminatgegenzugschicht. Auf solche Fußbodenpaneele wird mittels eines Streichaggregates auf der Paneelrückseite eine thermoplastische Schicht 2 aus einem Copolymer mit einer Temperatur von 150°C aufgetragen. Das Copolymer besteht aus Vinylacetat mit einem Acrylsäureesteranteil von 12 Masse-%. Die Stärke der aufgetragenen Schicht beträgt 0,3 mm. Anschließend wird das vorgenannte acrylathaltige Papier 3 mit einem Flächengewicht von 30 g/m² fest mit der Unterseite der thermoplastischen Schicht 2 verbunden.

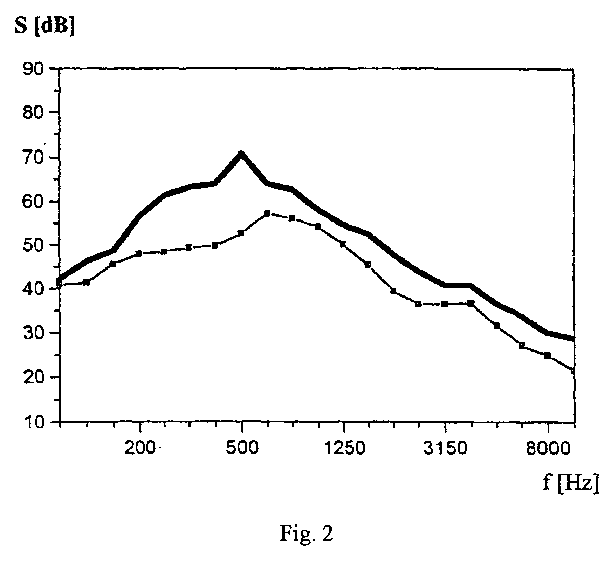

Trotz einer deutlich dünneren thermoplastischen Schicht konnten im Vergleich zum aus der Druckschrift WO 01/09461 A1 bekannten Stand der Technik vergleichbare schalldämmende Wirkungen erzielt werden. Es wurde überraschend gefunden, dass mit der erfindungsgemäßen Kombination "thermoplastische Schicht und dünner Träger" eine besonders effektive schalldämmende Wirkung erzielt werden kann. Mit der praxisnahen Prüfmethode IHD Werksnorm des eph Entwicklungs- und Prüflabor Holztechnologie GmbH Dresden wird bei einer Schichtstärke von 0,3 mm einer thermoplastischen Masse mit einer Abdeckung mit einem Papier von 30 g/m² eine Gehschallreduzierung von 10 dB erreicht. Das entspricht einer Gehschallreduzierung von 50%. In der Figur 2 wird das erzielte Ergebnis verdeutlicht. Hier ist der ermittelte Schalldruckpegel S in [dB] gegen die Frequenz f in [Hz] aufgetragen. Die Strich-Punktlinie (-·-) zeigt das Ergebnis eines Laminatbodens mit einer 0,3 mm dicken thermoplastischen Dämpfmasse nebst der erfindungsgemäßen Papierabdeckung der Unterseite. Die darüber liegende dicke durchgezogene Linie zeigt das Ergebnis einer Referenzmessung.

## Patentansprüche

1. Laminatfußbodenbelag unit einem Paneel (1) wobei an der Unterseite des Paneels eine aus thermoplastischem Material bestehende Schicht (2) angebracht ist, **gekennzeichnet durch** ein Papier als weitere Schicht (3) an der Unterseite der aus thermoplastischem Material bestehenden Schicht (2), so dass die Schicht aus thermoplastischem Material zwischen der Unterseite des Paneels(1) und der weiteren Schicht angebracht ist.

2. Laminatfußbodenbelag nach Anspruch 1, bei dem das thermoplastische Material ohne Einschluss von Luft auf die Unterseite des Paneels aufgebracht ist.

3. Laminatfußbodenbelag nach einem der vorhergehenden Ansprüche, bei dem das Paneel (1) dicker als die aus thermoplastischem Material bestehende Schicht (2) ist und oder die aus thermoplastischem Material bestehende Schicht (2) dicker als die weitere Schicht (3) ist.

4. Laminatfußbodenbelag nach einem der vorhergehenden Ansprüche, bei dem die aus thermoplastischem Material bestehende Schicht 0,1 bis 2 mm dick ist.

5. Laminatfußbodenbelag nach einem der vorhergehenden Ansprüche, bei dem die weitere Schicht (3) Kunstharz aufweist.

6. Laminatfußbodenbelag nach einem der vorhergehenden Ansprüche, bei dem als thermoplastisches Material Polyvinylformale, Polyvinylbutyrale, Polyvinyläther, Polyisobutene, Copolymerisate wie Terpolymerisate aus Acrylnitril, Butadien und Styrol (ABS), Copolymere aus Vinylchlorid und 2-Athylhexylacrylat, Copolymere aus Vinylacetat und Vinyllaurat, Polymer auf Tallharzbasis oder Mischungen dieser Polymere, auch unter Zusatz typischer Polymerweichmacher, eingesetzt sind.

7. Laminatfußbodenbelag nach einem der vorhergehenden Ansprüche, bei dem als thermoplastisches Material Polymerisate oder Copolymerisate mit Füllstoffen, vorzugsweise leichten organischen Stoffe vorgesehen sind.

8. Laminatfußbodenbelag nach einem der vorhergehenden Ansprüche, bei dem der Paneel aus Holz, Holzwerkstoffen und/ oder Kunststoff besteht.

9. Verfahren zur Herstellung eines Laminatfußbodenbelages nach einem der vorhergehenden Ansprüche, bei dem thermoplastisches Material erwärmt und auf der Unterseite aufgestrichen oder aufgewalzt und so fest verbunden worden ist.

10. Verfahren zur Herstellung eines Laminatfußbodenbelages nach Anspruch 9, wobei das im fließfähigen Zustand befindliche thermoplastische Material auf die Unterseite des Fußbodenpaneels aufgestrichen oder aufgewalzt wird.

## Claims

1. Laminate floor covering with a panel (1), in which a layer (2) consisting of thermoplastic material is applied to the underneath of the panel, **characterised by** a paper used as further layer (3) on the underneath of the layer (2) consisting of thermoplastic material, so that the layer of thermoplastic material is applied between the underneath of the panel (1) and the further layer.

2. Laminate floor covering according to claim 1, in which the thermoplastic material is applied without inclusion of air to the underneath of the panel.

3. Laminate floor covering according to one of the preceding claims, in which the panel (1) is thicker than the layer (2) consisting of thermoplastic material and/or the layer (2) consisting of thermoplastic material is thicker than the further layer (3).

4. Laminate floor covering according to one of the preceding claims, in which the layer consisting of thermoplastic material is 0.1 to 2 mm thick.

5. Laminate floor covering according to one of the preceding claims, in which the further layer (3) comprises synthetic resin.

6. Laminate floor covering according to one of the preceding claims, in which polyvinyl formals, polyvinyl butyrals, polyvinyl ethers, polyisobutenes, copolymers such as terpolymers of acrylonitrile, butadiene and styrene (ABS), copolymers of vinyl chloride and 2-ethylhexyl acrylate, copolymers of vinyl acetate and vinyl laurate, polymers based on tall resin or mixtures of these polymers, also with the addition of typical polymer plasticisers, are used as thermoplastic material.

7. Laminate floor covering according to one of the preceding claims, in which polymers or copolymers with fillers, preferably light organic substances, are provided as thermoplastic material.

8. Laminate floor covering according to one of the preceding claims, in which the panel consists of wood, wooden materials and/or plastic.

9. Method for the production of a laminate floor covering according to one of the preceding claims, in which the thermoplastic material is heated and is applied to or rolled onto the underneath and is thereby securely bonded thereto.

10. Method for the production of a laminate floor covering according to claim 9, wherein the thermoplastic material in the liquid state is applied to or rolled onto the underneath of the floor panel.

## Revendications

1. Revêtement de sol stratifié comprenant un panneau de lambris (1), une couche (2) réalisée en matériau thermoplastique étant disposée sur la face inférieure du panneau de lambris (1), **caractérisé par** un papier formant une couche supplémentaire (3) sur la face inférieure de la couche (2) en matériau thermoplastique, de telle sorte que la couche (2) en matériau thermoplastique est disposée entre la face inférieure du panneau de lambris (1) et la couche supplémentaire (3).

2. Revêtement de sol stratifié selon la revendication 1, dans lequel le matériau thermoplastique est déposé sans inclusion d'air sur la face intérieure du panneau de lambris.

3. Revêtement de sol stratifié selon l'une quelconque des revendications précédentes, dans lequel le panneau de lambris (1) a une épaisseur supérieure à celle de la couche (2) en matériau thermoplastique et/ou la couche (2) en matériau thermoplastique a une épaisseur supérieure à celle de la couche supplémentaire (3).

4. Revêtement de sol stratifié selon l'une quelconque des revendications précédentes, dans lequel la couche en matériau thermoplastique a une épaisseur de 0,1 à 2 mm.

5. Revêtement de sol stratifié selon l'une quelconque des revendications précédentes, dans lequel la couche supplémentaire (3) contient une résine synthétique.

6. Revêtement de sol stratifié selon l'une quelconque des revendications précédentes, dans lequel le matériau thermoplastique utilisé est un formal de polyvinyle, un butyral de polyvinyle, un polyvinyle-éther, un polyisobutène, un copolymère, tel que le terpolymère d'acrylonitrile, butadiène et styrène (ABS), un copolymère de chlorure de vinyle et 2-éthylhexylacrylate, un copolymère d'acétate de vinyle et laurate de vinyle, un polymère de résine d'huile de pin ou des mélanges de ces polymères, également avec addition de plastifiant pour polymère typique.

7. Revêtement de sol stratifié selon l'une quelconque des revendications précédentes, **caractérisé en ce qu'**il est prévu d'utiliser comme matériau thermoplastique des polymères ou copolymères avec des matières de charge, de préférence des matières organiques légères.

8. Revêtement de sol stratifié selon l'une quelconque des revendications précédentes, dans lequel le panneau de lambris est réalisé en bois, en matériaux à base de bois et/ou en matière synthétique.

9. Procédé de fabrication d'un revêtement de sol stratifié selon l'une quelconque des revendications précédentes, dans lequel le matériau thermoplastique est chauffé, puis appliqué ou laminé sur la face inférieure et est ainsi assemblé solidement.

10. Procédé de fabrication d'un revêtement de sol stratifié selon la revendication 9, dans lequel le matériau thermoplastique à l'état coulant est appliqué ou laminé sur la face inférieure du panneau de lambris formant le sol.
